# EUROPÄISCHE PATENTSCHRIFT

(11) **EP 0 452 544 B1**
(45) Veröffentlichungstag und Bekanntmachung des Hinweises auf die Patenterteilung: **20.09.1995**
(21) Anmeldenummer: 90122090.5
(22) Anmeldetag: 19.11.1990
(51) Int. Cl.: A01D 41/12

(54) **Sensor für Landmaschinen**
Sensor for agricultural machines
Capteur pour machines agricoles

(30) Priorität: 28.11.1989 DD 334899
(43) Veröffentlichungstag der Anmeldung: 23.10.1991
(73) Patentinhaber: MDW Mähdrescherwerke GmbH, D-02692 Singwitz (DE)
(72) Erfinder: Bischoff, Lutz Dipl.-Ing., O-8038 Dresden (DE); Adam, Hagen, Dipl.-Ing., W-4830 Gütersloh (DE); Noack, Christian Dipl.-Ing., O-8601 Guttau (DE); Bernhardt, Gerd Dipl.-Ing., O-8036 Dresden (DE)
(74) Vertreter: Krautwurst, Günter

(56) Entgegenhaltungen:
- EP-A- 0 339 142
- DE-A- 2 203 221
- DE-A- 2 835 895
- DE-A- 3 731 080
- FR-A- 2 287 159
- GB-A- 2 103 796
- US-A- 4 481 756

## Beschreibung

Die Erfindung bezieht sich auf einen Sensor für Landmaschinen zum Erfassen von Impulsen, die beim Auftreffen fallender Erntegutbestandteile auf einen beidseitig gelagerten und quer zur Erntegutflußrichtung angeordneten Impulsaufnehmer entstehen, wobei der Sensor über einen Wandler ein der erfaßten Erntegutmenge proportionales Ausgangssignal abgibt, insbesondere zum Erfassen von Erntegutströmen von Getreide- oder anderen Samenkörnern an Mähdreschern.

Zum Erfassen der Körnerverluste an Mähdreschern sind am abgabeseitigen Ende der Schüttler und der Siebe verschiedenartig ausgeführte Sensoren angebracht.

Aus der DE-A-22 03 221 ist beispielsweise eine Sensorvorrichtung zum Ermitteln der Körnerverluste bekannt, bei der innerhalb eines mit einer Flüssigkeit gefüllten rohrförmigen Impulsaufnehmers ein Druckfühler angeordnet ist, der in Abhängigkeit von Druckimpulsen, die in der Flüssigkeit durch das Aufprallen von Körnern an der Oberfläche entstehen, elektrische Signale erzeugt. Da der elektro-mechanische Wandler innerhalb des Impulsaufnehmers angeordnet ist, erfordert der Aufnehmer einen relativ großen Durchmesser. Bei großen Erntegutmengen kommt es deshalb im Aufnehmerbereich zu Stauungen, die dazu führen, daß sich die Körner gegenseitig beeinflussen und zum Teil die Oberfläche des Aufnehmers nicht erreichen, wodurch Ungenauigkeiten und Meßfehler auftreten. Des weiteren erfordert die Befestigung des Wandlers und die Herstellung und Wartung des mit einer Flüssigkeit gefüllten Aufnehmers einen erheblichen Aufwand.

Auch bei dem aus der DE-A-28 35 895 bekannten Sensor zum Erfassen der Körnerverluste bei einem Mähdrescher treten aufgrund des großen erforderlichen Durchmesser des rohrförmigen Aufnehmers bei großen Erntegutdurchsätzen Stauungen auf. Der aus einem piezoelektrischen Kristall bestehende Wandler ist im Innenraum des Aufnehmers angeordnet und dadurch zwar vor Verschmutzungen und mechanischen Beschädigungen geschützt, jedoch erfordert eine solche Ausführung eine aufwendige Herstellung.

GB-A-2 103 796 beschreibt einen Sensor gemäß dem Oberbegriff des ersten Anspruchs.

Das Ziel der Erfindung besteht darin, eine störungsfreie Funktionsweise des Sensors zu erreichen und den Herstellungsaufwand zu verringern.

Der Erfindung liegt die Aufgabe zugrunde, den Sensor so auszubilden, daß auch bei einer großen Erntegutmenge und einer damit verbundenen großen Impulsanzahl ein hohes Auflösungsvermögen der Impulse erreicht wird.

Erfindungsgemäß wird dies durch den Sensor gemäß Anspruch 1 gelöst.

Nach weiteren Merkmalen der Erfindung besteht der Impulsaufnehmer vollständig oder teilweise aus einem korrosionsarmen Metall. Vorzugsweise ist der Impulsaufnehmer als Rundstab ausgebildet. Am Impulsaufnehmer sind ein oder mehrere elektro-mechanische Wandler angeordnet, die vorzugsweise als piezoelektrische Elemente ausgebildet sind. Der Impulsaufnehmer ist beidseitig formschlüssig und schwingungsgedämpft in Lagerbuchsen der Lagerstellen angeordnet.

Durch die erfindungsgemäße Sensorausführung wird eine hohe Erfassungsgenauigkeit der abgeschiedenen Körner im gesamten Abscheidebereich ermöglicht. Kurzstroh- und Spreuteile beeinflussen nicht die Impulssignale. Der Sensor weist eine einfache konstruktive Gestaltung, einen geringen Herstellungsaufwand, eine große mechanische Belastbarkeit und eine Unempfindlichkeit gegen mechanische und akustische Maschinenschwingungen auf. Durch seine Anordnung an den Körnerabgangsbereichen erfolgt keine Behinderung des Erntegutflusses. Ablagerungen von Staub- und Erntegutbestandteilen werden wirksam verhindert.

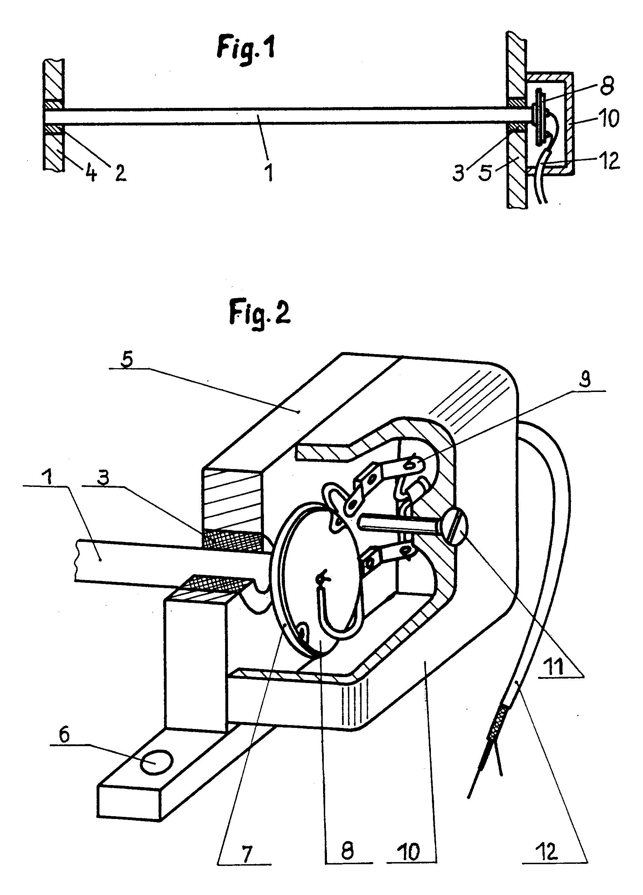

Die Erfindung wird nachstehend an einem Ausführungsbeispiel näher erläutert. In der zugehörigen Zeichnung zeigen
- Fig. 1:: eine schematische Darstellung des Sensors und
- Fig. 2:: eine perspektivische Ansicht einer Lagerstelle des Impulsaufnehmers mit dem Wandler.

Zum Erfassen der beim Auftreffen fallender Getreide- oder anderer Samenkörner auf ein Aufprallelement entstehenden Impulse ist im jeweiligen Körnerabgangsbereich eines nicht dargestellten Mähdreschers ein quer zur Erntegutflußrichtung verlaufender Impulsaufnehmer 1 in horizontaler Lage angeordnet. Der Impulsaufnehmer 1 besteht aus einem biegesteifen stabförmigen Profilkörper mit einem vollflächigen Querschnitt, vorzugsweise aus einem Rundstab. Er ist vollständig oder teilweise aus einem nichtrostenden Metall mit guten akustischen Leiteigenschaften hergestellt. Sein Durchmesser betragt etwa 5 bis 10 mm und richtet sich nach der im jeweiligen Anwendungsfall zu erfassenden Körnermenge. Der Impulsaufnehmer 1 ist an beiden Endbereichen in Lagerbuchsen 2;3 , die aus einem elastischen Werkstoff bestehen, gelagert. Die Lagerbuchen 2; 3 sind in Halterungen 4; 5 angeordnet, die über Schraubverbindungen 6 mit maschinenfesten Rahmenteilen schwingungsgedämpft verbunden sind. Durch die elastische Ausbildung der Lagerstellen wird die Übertragung von mechanischen und akustischen Maschinenschwingungen auf den Sensor gedämpft. An einer Stirnfläche des Impulsaufnehmers 1 ist außerhalb der Lagerstelle eine Platte 7 befestigt, an der ein elektro-mechanischer Wandler 8 angebracht ist. Als Wandler 8 dient eine piezokeramische Scheibe, ein Dehnmeßstreifen oder eine andere bekannte Wandlerausführung. Der Wandler 8 und die Anschlußelemente 9 sind durch eine Kapsel 10, die mit einer Schraube 11 mit der Halterung 5 verbunden ist, gegen äußere Einflüsse wie Staub, Feuchtigkeit und mechanische Beanspruchungen geschützt. Der Wandler 8 wandelt die beim Auftreffen von Körnern auf den Impulsaufnehmer 1 entstehenden Körperschallschwingungen in elektrische Signale um. Über die Anschlußelemente 9 und ein abgeschirmtes Kabel 12 werden diese Signale einer elektronischen Verarbeitungseinheit zugeführt. Da der Wandler 8 im biegefreien Bereich des Impulsaufnehmers 1 angeordnet ist, werden keine durch mechanische Eigenschwingungen hervorgerufene elektrische Signale erzeugt. Der Sensor weist deshalb keine Beeinträchtigung der Nutzsignale durch Störsignale auf. Außerdem führt die Wandlung von ausschließlich Körperschallwellen, die durch den stoßartigen Aufprall der Körner auf den Impulsaufnehmer 1 entstehen, zu schnell abklingenden Signalen, deren Zeitdauer vom Beginn bis zum Ende 1 bis 2 ms beträgt, so daß eine hohe Impulsauflösung ermöglicht wird. Da die Intensität der Schallwellen über die Länge des Impulsaufnehmers 1 kaum gedämpft wird, besitzt der Sensor eine nahezu gleichmäßige Empfindlichkeit über die gesamte Länge und ermöglicht die Erfassung einer großen Anzahl von Impulsaufnahmen in einer kurzen Zeiteinheit. Durch die stabförmige Ausbildung des Impulsaufnehmers 1 ist es trotz einer kleinen Aufnehmerfläche möglich, einen großen Körnerabscheidebereich zu erfassen, so daß das Meßergebnis nicht durch kleine örtliche Prozeßfehler verfälscht wird. Infolge der gekrümmten Aufnehmeroberfläche wird das Festsetzen von Staub und feuchten Erntegutbestandteilen verhindert und dadurch das Meßverhalten positiv beeinflußt. Durch die von der Oberfläche abprallenden Körner erfolgt keine gegenseitige Beeinflussung ihrer Bewegungsbahnen. Das Meßsignal verhält sich daher im gesamten Meßbereich linear zur Anzahl der abgeschiedenen Körner.

### Aufstellung der verwendeten Bezugszeichen

- 1: Impulsaufnehmer
- 2; 3: Lagerbuchsen
- 4; 5: Halterungen
- 6: Schraubverbindungen
- 7: Platte
- 8: Wandler
- 9: Anschlußelemente
- 10: Kapsel
- 11: Schraube
- 12: Kabel

## Patentansprüche

1. Sensor für Landmaschinen zum Erfassen von Impulsen, die beim Auftreffen fallender Erntegutbestandteile auf einen beidseitig gelagerten und quer zur Erntegutflußrichtung angeordneten Impulsaufnehmer (1) entstehen, wobei der Sensor über einen Wandler (8) ein der erfaßten Erntegutmenge proportionales Ausgangssignal abgibt und bei dem der Impulsaufnehmer (1) als biegesteifer stabförmiger Profilkörper ausgebildet und an beiden Endbereichen in Lagerstellen elastisch gelagert ist, insbesondere zum Erfassen von Getreide oder anderen Samenkörnern an Mähdreschern, gekennzeichnet durch folgende Merkmale:
a) der Profilkörper weist einen vollflächigen Querschnitt auf,
b) an einer Stirnfläche des Impulsaufnehmers (1) ist außerhalb des Bereiches der beiden Lagerstellen und außerhalb des Bereiches zwischen beiden Lagerstellen eine Platte (7) befestigt, an der ein elektromechanischer Wandler (8) angeordnet ist,
c) die Platte (7) ist mit dem Wandler (8) in einer Kapsel (10) angebracht.

2. Sensor nach Anspruch 1, dadurch gekennzeichnet, daß der Impulsaufnehmer (1) vollständig oder teilweise aus einem korrosionsarmen Metall besteht.

3. Sensor nach Anspruch 1 und 2, dadurch gekennzeichnet, daß der Impulsaufnehmer (1) vorzugsweise als Rundstab ausgebildet ist.

4. Sensor nach Anspruch 1 bis 3, dadurch gekennzeichnet, daß am Impulsaufnehmer (1) ein oder mehrere elektro-mechanische Wandler (8) angeordnet sind, die vorzugsweise als piezoelektrische Elemente ausgebildet sind.

5. Sensor nach Anspruch 1 bis 4, dadurch gekennzeichnet, daß der Impulsaufnehmer (1) beidseitig formschlüssig und schwingungsgedämpft in Lagerbuchsen (2; 3) der Lagerstellen angeordnet ist.

## Claims

1. Sensor installed in agricultural machines for detecting the pulses produced by parts of the harvested product falling onto a pulse pickup (1) arranged across the direction of the flow of the harvested product and supported in bearings on either side with the sensor supplying, via a transducer (8), an output signal proportional to the quantity of the harvested product detected and in which the pulse pickup (1) is a rigid sectional bar and supported in elastic bearings at either end, especially designed to detect grain or other seeds in harvester-threshers, characterized by:
a) the sectional bar having a full cross-sectional area;
a) one of the end faces of the pulse pickup (1) having mounted to it, outside the two bearings and outside the area between the two bearings, a plate (7) carrrying an electromagnetic transducer (8);
c) the plate (7) and the transducer (8) being accommodated in a common enclosure (10).

2. Sensor according to claim 1 characterized by the pulse pickup (1) consisting completely or partly of low-corrosion metal.

3. Sensor according to any of claims 1 and 2 characterized by the pulse pickup (1) being preferably of round bar shape.

4. Sensor according to any of claims 1 to 3 characterized by the pulse pickup (1) having mounted to it one or several electromechanical transducers (8) being preferably of piezoelectric type.

5. Sensor according to any of claims 1 to 4 characterized by the pulse pickup (1) being supported positively and with antivibration mountings in the bearing bushes (2;3) of the bearings on either side.

## Revendications

1. Détecteur pour machines agricoles pour registrer les impulsations qui se produisent quand des morceaux de récolte tombent sur un capteur (1) qui est logés de deux cotés et qui est orienté en sens transversal à la ligne fonctionelle de la récolte, où le détecteur par un convertisseur (8) fait un signal de sortie proportionalement à la quantité enregistrée, et où le capteur (1), en forme de corps profilé, est configuré comme un bâton de rigidité flexionelle et qui est logé élastiquement sur les deux extrémités, spécialement pour capter céréals et autres grains de semences aux moissoneuses-batteuses, ceci est caractérisé par:
a) le corps profilé a un profil en travers sur toute la surface,
b) une plaque (7) fixée sur une surface de front du capteur (1) en dehors de l'espace de deux points d' appui et en dehors de l'espace entre les deux points d' appui, à laquelle un convertisseur (8) est monté,
c) la plaque (7) se trouvent dans une capsule (10) avec le convertisseur (8).

2. Détecteur selon revendication 1 caracterisé par un capteur (1) qui consiste complètement ou partiellement d'un métal pauvre de corrosion.

3. Détecteur selon revendications 1 et 2, caractérisé par le capteur qui est formé de préférence en un bâton rond.

4. Détecteur selon revendication 1 à 3, caractérisé par un capteur (1) auquel un ou plusieurs convertisseurs (8) électromagnétiques sont montés et qui sont de préférence en éléments piézoélectriques.

5. Détecteur selon revendications 1 à 4, caractérisé par un capteur (1) qui est claboté antivibratilement de deux cotés dans des coussinets (2; 3) de points d'appui.
